# EUROPEAN PATENT SPECIFICATION

(11) **EP 4 177 086 B1**
(45) Date of publication and mention of the grant of the patent: **28.01.2026**
(21) Application number: 22202938.1
(22) Date of filing: 21.10.2022
(51) Int. Cl.: B60D 1/02, B60D 1/36

(54) **A DRAWBAR COUPLING**
ZUGSTANGENKUPPLUNG
COUPLAGE DE BARRE D'ATTELAGE

(30) Priority: 05.11.2021 DE 202021106070 U
(43) Date of publication of application: 10.05.2023
(73) Proprietor: Hyva Holding BV, 2408 AK Alphen aan den Rijn (NL)
(72) Inventor: INVERARDI, Angelo, 2408 AK Alphen aan den Rijn (NL)
(74) Representative: Haseltine Lake Kempner LLP

(56) References cited:
- DE-A1- 19 840 001
- DE-A1- 3 540 641
- DE-A1- 3 701 369
- DE-C- 728 350

## Description

The present invention relates to a drawbar coupling and a vehicle comprising the drawbar coupling. The document DE 37 01 369 A1 discloses a drawbar coupling.

Vehicles which are configured to attached to trailers, such as central axle trailers, are typically provided with a drawbar coupling to attach a drawbar of a trailer to the vehicle. However, drawbar couplings are often disposed on a chassis, such that the clearance between the road and the drawbar coupling is too small, and they are prone to damage when driving on bad roads.

According to a first aspect, there is provided a drawbar coupling comprising: a funnel around a bushing, a housing cap fixed to the bushing, and a torsional spring; wherein: the funnel is configured to rotate with respect to the bushing and the housing cap; the funnel defines a toroidal groove in which the torsional spring is received, and the housing cap comprises a corresponding recess within which the torsional spring is received, such that the torsional spring is disposed between the funnel and the housing cap; and the torsional spring is provided with a first spring tail and a second spring tail, wherein each spring tail is in contact with both the funnel and the housing cap when the funnel is in an equilibrium position with respect to the housing cap, such that the first spring tail and the second spring tail are configured to apply a biasing torque to the funnel and the housing cap respectively to bias the funnel and the housing cap towards the equilibrium position.

The housing cap may be provided with a cylindrical wall sector defining the recess in the housing cap. The cylindrical wall sector may have a first contact face and a second contact face at each end of the sector, each contact face being configured to engage a respective tail of the torsional spring or the funnel in the rotated position to provide the biasing torque to the funnel and the housing cap.

The cylindrical wall sector may be at least partially disposed within the toroidal groove of the funnel.

The torsional spring may comprise at least one shallow helical coil sector contiguous with a main helical coil sector, the shallow helical coil sector having a helix pitch less than a thickness of the torsional spring, and the main helical coil sector having a helix pitch equal to or greater than the thickness of the wire diameter of the torsional spring.

The helix pitch of the shallow helical coil sector may be substantially zero. The shallow helical coil sector may extend through 180 degrees of rotation around a centre of the torsional spring or fewer.

In an extreme rotated position corresponding to a maximum rotation between the funnel and the housing cap, an abutting wall of the housing cap may abut the funnel or the spring tail to prevent further rotation of the funnel and the bushing away from the equilibrium position.

The extreme rotated position may be offset from the equilibrium position by a maximum rotation angle of the funnel with respect to the housing cap. The maximum rotation angle may be 45 degrees or fewer.

The toroidal groove of the funnel and the recess of the housing cap may define an enclosed toroidal space in which the torsional spring is disposed. The funnel or housing cap may comprise a stop protruding into the toroidal space to ensure that the torsional spring is orientated with respect to the funnel and the housing such that a helical diameter of the torsional spring in the equilibrium position is greater than a helical diameter of the torsional spring in the rotated position.

The torsional spring may comprise a coil extending around between 520-560 degrees from the first spring tail to the second spring tail.

According to a second aspect, there is provided a vehicle comprising the drawbar coupling according to the first aspect.

Embodiments will now be described, by way of example only, with reference to the accompanying Figures, in which:
**Figure 1** schematically shows a vehicle comprising a drawbar coupling;
**Figure 2** schematically shows a side view of an example drawbar coupling;
**Figure 3** schematically shows a side cross-sectional view of the example drawbar coupling;
**Figure 4** schematically shows an exploded view of the example drawbar coupling; and
**Figure 5** schematically shows a cross-sectional view of the example drawbar coupling through line A-A in Figure 3.

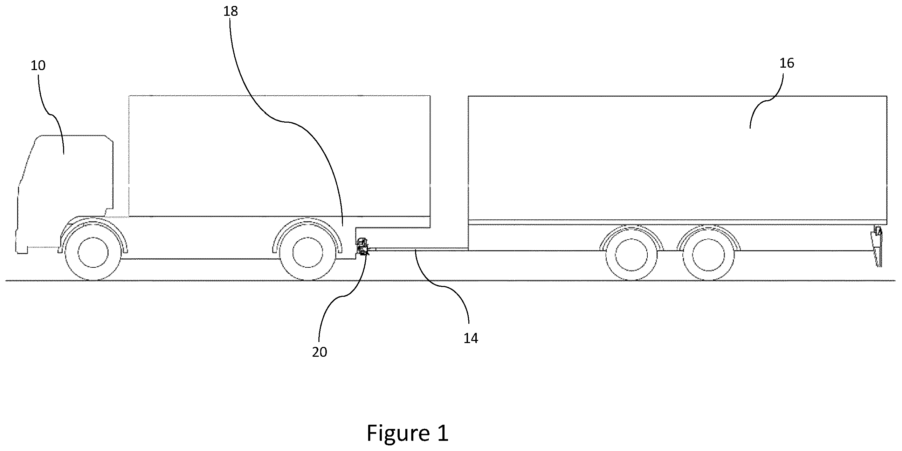

**Figure 1** shows a vehicle 10 comprising a drawbar coupling 20. The drawbar coupling 20 is coupled to a chassis 18 of the vehicle 10. The drawbar coupling 20 is also coupled to a drawbar 14 of a trailer 16, so that the drawbar 14 can pivot with respect to the chassis 18, through the drawbar coupling 20, to permit pivoting movement of the trailer 16 with respect to the vehicle 10.

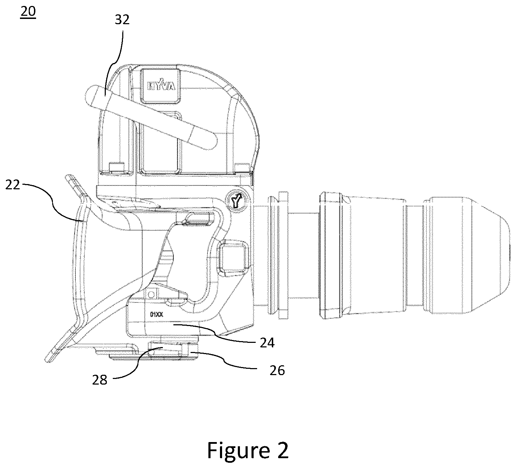

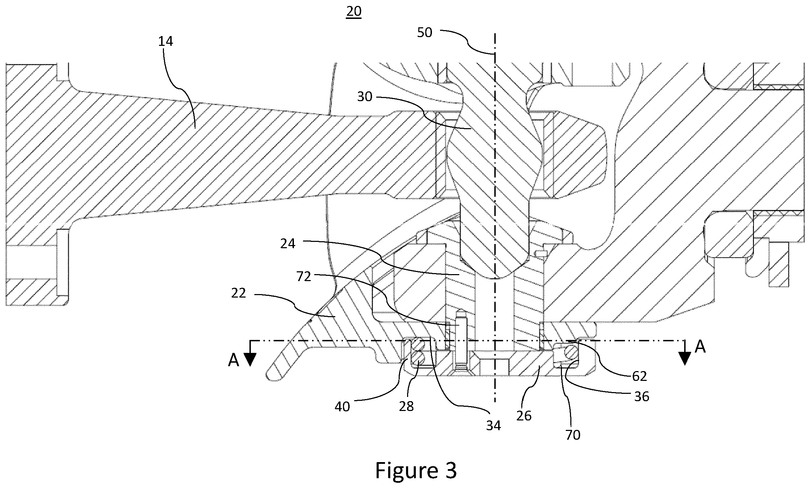

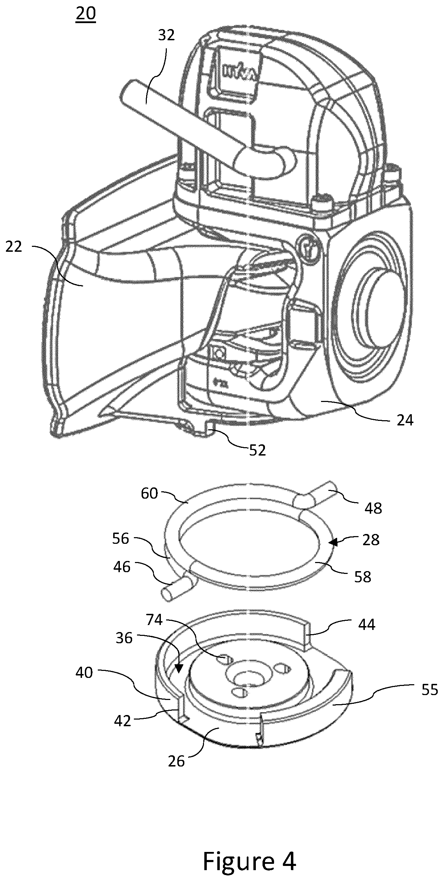

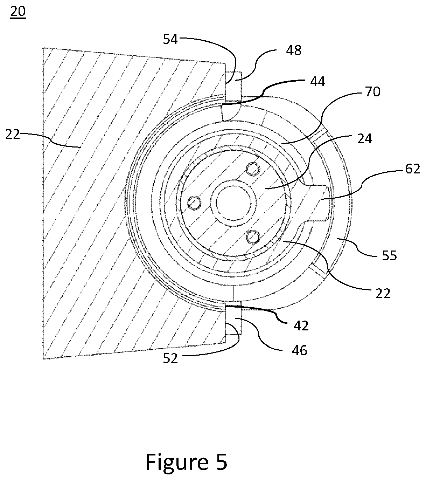

**Figure 2** shows a side view of the drawbar coupling 20. **Figure 3** shows a side cross-sectional view of the drawbar coupling 20 coupled to the drawbar 14. The drawbar coupling 20 comprises a funnel 22 around a bushing 24, a housing cap 26 fixed to the bushing 24 and a torsional spring 28. The funnel 22 is configured to guide an end of a drawbar 14 into a centre of the funnel 22 so that it can be securely coupled to the drawbar coupling 20. **Figure 4** shows an exploded view of the drawbar coupling 20 including the funnel 22, bushing 24, housing cap 26 and torsional spring 28. **Figure 5** shows a cross-sectional view through the line A-A in Figure 3.

The funnel 22 comprises a central hole in which the bushing 24 is received, and the funnel 22 is configured to rotate with respect to the bushing 24. The bushing 24 and the housing cap 26 are configured to be fixed together with a plurality of screws 72 into a plurality of screw holes 74 (best seen in Figures 3 and 4). Therefore, the funnel 22 is also configured to rotate with respect to the housing cap 26.

The funnel 22 is configured to receive and hold an end of the drawbar 14, such that the drawbar 14 is pivotable (via the funnel 22) with respect to the bushing 24, and the housing cap 26.

The drawbar coupling 20 comprises a handle 32 which is coupled to a fixing rod 30 (shown in Figure 3). The fixing rod 30 is configured to move linearly into the hole in the funnel 22 and out of the hole in the funnel 22 by rotation of the handle 32. When an end of a drawbar 14 is received within the funnel 22 and the fixing rod 30 is disposed out of the funnel 22, the handle 32 can be rotated to drive the fixing rod 30 into the funnel 22, and through a hole in the end of the drawbar 14 to fix the end of the drawbar 14 in place within the funnel 22 (as shown in Figure 3). The fixing rod 30 is then received within the bushing 24 so that their elongate axes are collinear with a pivot axis 50. The pivoting movement of the drawbar 14 is therefore constrained by the fixing rod 30, such that it is pivotable about the fixing rod 30, while the rotation of the funnel 22 is constrained by the bushing 24 such that the funnel 22 is pivotable about the bushing 24 and the housing cap 26. Since the elongate axes of the fixing rod 30 and the bushing 24 are collinear with the pivot axis 50, both the drawbar 14 and the funnel 22 are pivotable about the pivot axis 50. It will be appreciated that there may be other suitable means of fixing the end of a drawbar to the drawbar coupling, and that in some examples, there may be no fixing means.

The funnel 22 comprises a toroidal groove 34 (best seen in Figure 3) in which the torsional spring 28 is disposed. The toroidal groove 34 surrounds the bushing 24 such that the axis about which the torsional spring 28 is wound lies substantially collinear with the pivot axis 50. The housing cap 26 comprises a corresponding recess 36 within which the torsional spring 28 is received (best seen in Figure 3). Therefore, the torsional spring 28 is disposed between the funnel 22 and the housing cap 26, in a toroidal space defined by the toroidal groove 34 of the funnel 22 and the recess 36 housing cap 26. The toroidal space 70 in this example comprises a substantially rectangular cross-section. However, it will be appreciated that the toroidal space may comprise any suitable cross-section to receive the torsional spring, and that in other examples, the space between the funnel and the housing cap may not be toroidal.

In this example, the housing cap 26 is provided with a cylindrical wall sector 40 (best seen in Figures 3 and 4), which defines the recess 36 in the housing cap 26. The cylindrical wall sector 40 comprises a first contact face 42 and a second contact face 44 at each end of the sector.

The torsional spring 28 comprises a first spring tail 46 and a second spring tail 48, and the first contact face 42 and the second contact face 44 of the housing cap 26 are each configured to engage a respective first and second spring tail 46, 48 of the torsional spring 28, when the funnel 22 is in a neutral, equilibrium position with respect to the bushing 24 and the housing cap 26.

In this example, the funnel 22 comprises a wall which defines at least part of the toroidal groove 34 in the funnel 22 and which defines a third contact face 52 and fourth contact face 54 (best seen in Figure 5) at respective ends of the wall. The first spring tail 46 and the second spring tail 48 are configured to contact the third contact face 52 and the fourth contact face 54 respectively when the funnel 22 is in the equilibrium position. Therefore, each spring tail 46, 48 is in contact with both the funnel 22 and the housing cap 26 when the funnel 22 is in an equilibrium position.

In this example, the cylindrical wall sector 40 of the housing cap 26 is at least partially disposed within the toroidal groove 34. This ensures that, providing the first and second spring tails 46, 48 are long enough, they can contact both the funnel 22 and the housing cap 26. This further ensures that the housing cap 26 is recessed within the funnel 22 so that the drawbar coupling 20 is more space efficient. In other examples, the wall of the funnel may be disposed within the recess of the housing cap.

When the funnel 22 is rotated with respect to the bushing 24 and the housing cap 26 away from the equilibrium position and towards a rotated position, the first spring tail 46 will remain in contact with either the first contact face 42 or the third contact face 52, and the second spring tail 48 will remain in contact with either the second contact face 44 or the fourth contact face 54. Therefore, as the funnel 22 is rotated with respect to the housing cap 26, the first spring tail 46 and the second spring tail 48 are brought closer together such that they provide a biasing torque to the funnel 22 and the housing cap 26 to bias the funnel 22 towards the equilibrium position.

The housing cap 26 further comprises a corresponding abutting wall 55 disposed on an opposing side of the spring tails 46, 48 to the cylindrical wall sector 40. The abutting wall 55 is configured to abut one of the spring tails when the funnel 22 is rotated, to define an extreme rotated position corresponding to a maximum rotation between the funnel 22 and the housing cap 26. Abutting the spring tails 46, 48 prevents further rotation of the funnel 22 with respect to the bushing 24 and the housing cap 26 away from the equilibrium position. In other examples, the abutting wall may be configured to abut the funnel in the extreme rotated position.

In this example, the extreme rotated position is offset from the equilibrium position by a maximum rotation angle of the funnel 22 with respect to the housing cap 26 of approximately 45 degrees. In other examples, the maximum rotation angle may be less than 45 degrees. In yet further examples, the maximum rotation angle may be more than 45 degrees. Having a maximum rotation angle helps to ensure that the trailer 14 cannot pivot with respect to the vehicle 10 too much.

In this example, the torsional spring 28 comprises a coil extending from the first spring tail 46 through 540 degrees to the second spring tail 48, such that the first spring tail 46 directly opposes the second spring tail 48 (by 180 degrees) when not deformed.

The torsional spring 28 in this example comprises a first shallow helical coil sector 56 from the first spring tail 46, a main helical coil sector 58, and a second shallow helical coil sector 60 extending from the second spring tail 48. The main helical coil sector 58 is contiguous with the first shallow helical coil sector 56 and the second shallow helical coil sector 60. In this example each of the coil sectors 56, 58, 60 extends through 18 degrees.

In this example, the first and second shallow helical coil sectors 56, 60 have a helix pitch at substantially zero, so that the whole of the first shallow helical coil sector 56 and second shallow helical coil sector 60 contact the housing cap 26 and the funnel 22 respectively. It will be appreciated that the torsional spring may be flipped so that the first shallow helical coil sector is in contact with the funnel and the second shallow helical coil sector is in contact with the housing cap. The helix pitch of the main helical coil sector 58 in this example is equal to double the thickness of the wire diameter (for a 180 degree turn) so that the first and second shallow helical coil sector 56, 60 are directly on top of one another.

Having at least 540 degrees of helical coil ensures that it can provide a suitable biasing force to the funnel 22 and the housing cap 26, whilst minimising the height of the torsional spring 28. Further, the geometry of the torsional spring 28 ensures that the height of the torsional spring 28 is minimal (i.e., only two times the thickness of the wire diameter of the torsional spring 28), so that the height of the drawbar coupling 20 is minimised.

In other examples, it will be appreciated that the torsional spring may comprise a simple helix, or that the shallow helical coil sectors have a helix pitch of more than zero, but less than the thickness of the wire diameter of the torsional spring, and the main helical coil sector has a pitch which is greater than the thickness of the torsional spring, to ensure that the first and second shallow helical coil sector can sit directly on top of one another to reduce the height of the torsional spring.

The torsional spring 28 should be disposed between the funnel 22 and the housing cap 26 such that the movement of the funnel 22 with respect to the housing cap 26 causes a helical diameter of the torsional spring 28 to reduce from the equilibrium position to the rotated position. This ensures that the torsional spring 28 is providing the biasing force under tension. Therefore, the main helical coil sector 58 must be disposed in a position opposing the contact faces, by the abutting wall 55, so that the first spring tail 46 and the second spring tail 48 are driven towards the main helical section 58 when the funnel 22 is moved from the equilibrium position to a rotated position.

In this example, the funnel 22 comprises a stop 62 which protrudes into the toroidal space 70 on the side of the toroidal space 70 in which the main helical coil sector 58 is to be placed, by the abutting wall 55 of the housing cap. This ensures that the torsional spring 28 can only be inserted into the toroidal groove 34 in the correct orientation, such that the helical diameter of the torsional spring 28 is reduced upon movement of the funnel 22 from the equilibrium position to the rotated position. In other examples, the stop may protrude from the housing cap into the toroidal space.

## Claims

1. A drawbar coupling comprising: a funnel around a bushing, a housing cap fixed to the bushing, and a torsional spring; wherein:
the funnel is configured to rotate with respect to the bushing and the housing cap;
the funnel defines a toroidal groove in which the torsional spring is received, and the housing cap comprises a corresponding recess within which the torsional spring is received, such that the torsional spring is disposed between the funnel and the housing cap; and
the torsional spring is provided with a first spring tail and a second spring tail,
wherein each spring tail is in contact with both the funnel and the housing cap
when the funnel is in an equilibrium position with respect to the housing cap,
such that the first spring tail and the second spring tail are configured to apply a biasing torque to the funnel and the housing cap respectively to bias the funnel and the housing cap towards the equilibrium position.

2. A drawbar coupling according to claim 1, wherein
the housing cap is provided with a cylindrical wall sector defining the recess in the housing cap, the cylindrical wall sector having a first contact face and a second contact face at each end of the sector, each contact face being configured to engage a respective tail of the torsional spring or the funnel in the rotated position to provide the biasing torque to the funnel and the housing cap.

3. A drawbar coupling according to claim 2, wherein the cylindrical wall sector is at least partially disposed within the toroidal groove of the funnel.

4. A drawbar coupling according to any of claims 1-3, wherein the torsional spring comprises at least one shallow helical coil sector contiguous with a main helical coil sector, the shallow helical coil sector having a helix pitch less than a thickness of the torsional spring, and the main helical coil sector having a helix pitch equal to or greater than the thickness of the wire diameter of the torsional spring.

5. A drawbar coupling according to claim 4, wherein the helix pitch of the shallow helical coil sector is substantially zero.

6. A drawbar coupling according to claim 4 or 5, wherein the shallow helical coil sector extends through 180 degrees of rotation around a centre of the torsional spring or fewer.

7. A drawbar coupling according to any preceding claim, wherein in an extreme rotated position corresponding to a maximum rotation between the funnel and the housing cap, an abutting wall of the housing cap abuts the funnel or the spring tail to prevent further rotation of the funnel and the bushing away from the equilibrium position.

8. A drawbar coupling according to claim 7, wherein the extreme rotated position is offset from the equilibrium position by a maximum rotation angle of the funnel with respect to the housing cap, and wherein the maximum rotation angle is 45 degrees or fewer.

9. A drawbar coupling according to any preceding claim, wherein the toroidal groove of the funnel and the recess of the housing cap define an enclosed toroidal space in which the torsional spring is disposed, and the funnel or housing cap comprise a stop protruding into the toroidal space to ensure that the torsional spring is orientated with respect to the funnel and the housing such that a helical diameter of the torsional spring in the equilibrium position is greater than a helical diameter of the torsional spring in the rotated position.

10. A drawbar coupling according to any preceding claim, wherein the torsional spring comprises a coil extending around between 520-560 degrees from the first spring tail to the second spring tail.

11. A vehicle comprising the drawbar coupling according to any of claims 1 to 10.

## Patentansprüche

1. Zugstangenkupplung, die Folgendes umfasst: einen Trichter um eine Buchse, eine an der Buchse befestigte Gehäusekappe und eine Torsionsfeder; wobei:
der Trichter dazu ausgelegt ist, sich in Bezug auf die Buchse und die Gehäusekappe zu drehen;
der Trichter eine Ringnut definiert, in der die Torsionsfeder aufgenommen ist, und die Gehäusekappe eine entsprechende Ausnehmung aufweist, in der die Torsionsfeder aufgenommen ist, so dass die Torsionsfeder zwischen dem Trichter und der Gehäusekappe angeordnet ist; und
die Torsionsfeder mit einem ersten Federende und einem zweiten Federende versehen ist, wobei jedes Federende sowohl mit dem Trichter als auch mit der Gehäusekappe in Kontakt ist, wenn sich der Trichter in einer Gleichgewichtsstellung bezüglich der Gehäusekappe befindet, so dass das erste Federende und das zweite Federende dazu ausgelegt sind, ein Vorspanndrehmoment auf den Trichter bzw. die Gehäusekappe aufzubringen, um den Trichter und die Gehäusekappe in Richtung der Gleichgewichtsposition vorzuspannen.

2. Zugstangenkupplung nach Anspruch 1, wobei
die Gehäusekappe mit einem zylindrischen Wandsektor versehen ist, der die Ausnehmung in der Gehäusekappe definiert, wobei der zylindrische Wandsektor an jedem Ende des Sektors eine erste Kontaktfläche und eine zweite Kontaktfläche aufweist, wobei jede Kontaktfläche dazu ausgelegt ist, entsprechend mit einem Ende der Torsionsfeder oder dem Trichter in der gedrehten Position in Eingriff zu kommen, um das Vorspanndrehmoment für den Trichter und die Gehäusekappe bereitzustellen.

3. Zugstangenkupplung nach Anspruch 2, wobei der zylindrische Wandsektor zumindest teilweise innerhalb der Ringnut des Trichters angeordnet ist.

4. Zugstangenkupplung nach einem der Ansprüche 1-3, wobei die Torsionsfeder mindestens einen flachen Schraubenfedersektor umfasst, der an einen Hauptschraubenfedersektor angrenzt, wobei der flache Schraubenfedersektor eine Wendelsteigung aufweist, die kleiner als eine Dicke der Torsionsfeder ist, und wobei der Hauptschraubenfedersektor eine Wendelsteigung aufweist, die gleich oder größer als die Dicke des Drahtdurchmessers der Torsionsfeder ist.

5. Zugstangenkupplung nach Anspruch 4, wobei die Wendelsteigung des flachen Schraubenfedersektors im Wesentlichen null ist.

6. Zugstangenkupplung nach Anspruch 4 oder 5, wobei sich der flache Schraubenfedersektor über 180 Grad Drehung um ein Zentrum der Torsionsfeder oder weniger erstreckt.

7. Zugstangenkupplung nach einem der vorhergehenden Ansprüche, wobei in einer extremen Drehposition, die einer maximalen Drehung zwischen dem Trichter und der Gehäusekappe entspricht, eine anliegende Wand der Gehäusekappe an dem Trichter oder dem Federende anliegt, um eine weitere Drehung des Trichters und der Buchse weg von der Gleichgewichtsposition zu verhindern.

8. Zugstangenkupplung nach Anspruch 7, wobei die extreme Drehposition von der Gleichgewichtsposition um einen maximalen Drehwinkel des Trichters in Bezug auf die Gehäusekappe versetzt ist und wobei der maximale Drehwinkel 45 Grad oder weniger beträgt.

9. Zugstangenkupplung nach einem der vorhergehenden Ansprüche, wobei die Ringnut des Trichters und die Ausnehmung der Gehäusekappe einen umschlossenen Torusraum definieren, in dem die Torsionsfeder angeordnet ist, und der Trichter bzw. die Gehäusekappe einen in den Torusraum ragenden Anschlag aufweisen, um sicherzustellen, dass die Torsionsfeder in Bezug auf den Trichter und das Gehäuse so ausgerichtet ist, dass ein Windungsdurchmesser der Torsionsfeder in der Gleichgewichtsstellung größer ist als ein Windungsdurchmesser der Torsionsfeder in der Drehstellung.

10. Zugstangenkupplung nach einem der vorhergehenden Ansprüche, wobei die Torsionsfeder eine Spirale umfasst, die sich zwischen 520-560 Grad von dem ersten Federende zu dem zweiten Federende erstreckt.

11. Fahrzeug, umfassend die Zugstangenkupplung nach einem der Ansprüche 1 bis 10.

## Revendications

1. Couplage de barre d'attelage comprenant : un entonnoir autour d'une douille, un capuchon de boîtier fixé à la douille, et un ressort de torsion ;
l'entonnoir étant conçu pour tourner par rapport à la douille et au capuchon de boîtier ;
l'entonnoir définissant une rainure toroïdale dans laquelle le ressort de torsion est reçu, et le capuchon de boîtier comprenant un évidement correspondant dans lequel le ressort de torsion est reçu, de sorte que le ressort de torsion soit disposé entre l'entonnoir et le capuchon de boîtier ; et
le ressort de torsion étant pourvu d'une première queue de ressort et d'une seconde queue de ressort, chaque queue de ressort étant en contact à la fois avec l'entonnoir et le capuchon de boîtier lorsque l'entonnoir se trouve dans une position d'équilibre par rapport au capuchon de boîtier, de sorte que la première queue de ressort et la seconde queue de ressort soient conçues pour appliquer un couple de sollicitation à l'entonnoir et au capuchon de boîtier respectivement pour solliciter l'entonnoir et le capuchon de boîtier vers la position d'équilibre.

2. Couplage de barre d'attelage selon la revendication 1,
le capuchon de boîtier étant pourvu d'un secteur de paroi cylindrique définissant l'évidement dans le capuchon de boîtier, le secteur de paroi cylindrique présentant une première face de contact et une seconde face de contact à chaque extrémité du secteur, chaque face de contact étant conçue pour venir en prise avec une queue respective du ressort de torsion ou de l'entonnoir en position de rotation afin de fournir le couple de sollicitation à l'entonnoir et au capuchon de boîtier.

3. Couplage de barre d'attelage selon la revendication 2, le secteur de paroi cylindrique étant au moins partiellement disposé à l'intérieur de la rainure toroïdale de l'entonnoir.

4. Couplage de barre d'attelage selon l'une quelconque des revendications 1 à 3, le ressort de torsion comprenant au moins un secteur hélicoïdal peu profond contigu à un secteur hélicoïdal principal, le secteur hélicoïdal peu profond ayant un pas d'hélice inférieur à une épaisseur du ressort de torsion, et le secteur hélicoïdal principal ayant un pas d'hélice égal ou supérieur à l'épaisseur du diamètre du fil du ressort de torsion.

5. Couplage de barre d'attelage selon la revendication 4, le pas d'hélice du secteur hélicoïdal peu profond étant sensiblement nul.

6. Couplage de barre d'attelage selon la revendication 4 ou 5, le secteur hélicoïdal peu profond s'étendant sur 180 degrés de rotation autour d'un centre du ressort de torsion ou moins.

7. Couplage de barre d'attelage selon l'une quelconque des revendications précédentes, dans une position de rotation extrême correspondant à une rotation maximale entre l'entonnoir et le capuchon de boîtier, une paroi de butée du capuchon de boîtier venant en butée contre l'entonnoir ou la queue de ressort pour empêcher une rotation supplémentaire de l'entonnoir et de la douille à l'opposé de la position d'équilibre.

8. Couplage de barre d'attelage selon la revendication 7, la position de rotation extrême étant décalée de la position d'équilibre d'un angle de rotation maximum de l'entonnoir par rapport au capuchon de boîtier, et l'angle de rotation maximum étant de 45 degrés ou moins.

9. Couplage de barre d'attelage selon l'une quelconque des revendications précédentes, la rainure toroïdale de l'entonnoir et l'évidement du capuchon de boîtier définissant un espace toroïdal fermé dans lequel est disposé le ressort de torsion, et l'entonnoir ou le capuchon de boîtier comprenant une butée faisant saillie dans l'espace toroïdal pour assurer que le ressort de torsion est orienté par rapport à l'entonnoir et au boîtier de sorte qu'un diamètre hélicoïdal du ressort de torsion en position d'équilibre soit supérieur à un diamètre hélicoïdal du ressort de torsion en position de rotation.

10. Couplage de barre d'attelage selon l'une quelconque des revendications précédentes, le ressort de torsion comprenant une bobine s'étendant autour de 520 à 560 degrés depuis la première queue de ressort jusqu'à la seconde queue de ressort.

11. Véhicule comprenant le couplage de barre d'attelage selon l'une quelconque des revendications 1 à 10.
